Europäisches Patentamt

(19) European Patent Office

Office européen des brevets

(11) Publication number: **0 200 281**
**B1**

# EUROPEAN PATENT SPECIFICATION

(45) Date of publication of the patent specification:
27.12.90

(51) Int. Cl.⁵: **B60P 5/00,** G01G 19/08

(21) Application number: **86200776.2**

(22) Date of filing: **02.05.86**

(54) Vehicle provided with a balance.

(30) Priority: **03.05.85 FI 851771**

(43) Date of publication of application:
**10.12.86 Bulletin 86/45**

(45) Publication of the grant of the patent:
**27.12.90 Bulletin 90/52**

(84) Designated Contracting States:
**AT BE CH DE FR GB LI NL SE**

(56) References cited:
**FR-A- 2 159 623**
**US-A- 3 010 529**
**US-A- 3 321 035**

(73) Proprietor: **Oy Norcar AB, SF-66530 Kvevlax(FI)**

(72) Inventor: **Storm, Sigvald, SF-65710 Singsby(FI)**

(74) Representative: **Smulders, Theodorus A.H.J., Ir. et al,
Vereenigde Octrooibureaux Nieuwe Parklaan 107,
NL-2587 BP 's-Gravenhage(NL)**

ACTORUM AG

## Description

The present invention concerns a vehicle provided with a balance, which said vehicle comprises a reinforced frame, four electronic balance cells connected to a control unit and mounted on the said frame at points below each corner portion of the vehicle platform or tank, on which said balance cells the said platform or tank is supposed to rest freely during weighing, whereby the vehicle frame is provided with a lifting and supporting device, which is, jointly operative with corresponding holder members placed at the bottom side of the platform or tank, arranged so as to relieve the load of the balance cells and to fix the platform or tank in a raised position when the vehicle is being driven, as well as to disconnect the platform or tank completely free during weighing.

The prior-art constructions of balances mounted on vehicles have usually been arranged so as to feel the degree of compression of the spring system of the vehicle, or they may also have been of the above type with electronic balance cells mounted on the vehicle frame. However, none of the prior-art constructions has been approved of by the authorities for indicating either the total weight of the cargo or for determining the quantity of cargo removed from the platform or tank. They have only been able to be used for indicating possible overload or for indicating a rough estimate of the weight of the cargo. Under no circumstances has it been possible to use them for the determination of a dosaged quantity of material.

It is a basic prerequisite in order that a weighing device mounted on a vehicle could be approved, i.e. officially sealed, that its balance cells can be made completely free from load and be kept in the free condition when the vehicle is driven on highway as well as that the vehicle platform or tank rest completely freely on the balance cells during weighing, without any other support points whatsoever. Thus, the platform or the tank must be completely free during weighing and be securely fixed onto the torsionally rigid frame during running on highway. In the German Patent No. 459,165 attempts have been made to provide a solution based on this principle, but the way in which the weighing members are released when weighing is not being performed is, on the whole, not suitable with loads of the order of magnitude that are common to-day. The releasing device of the said patent is, viz., arranged so that it actively performs a lifting effect acting upon the platform all the time when weighing is not performed. Moreover, this releasing device cannot lock the platform in the raised position so that a stability of the suspension of the platform necessary for the traffic rhythm of this day were obtained.

The object of the present invention is to provide a weighing device of the above mentioned type mounted on a vehicle which is simple to use and gives reliable measurement results so that it can be sealed officially, as well as permits reliable securing of the platform or tank onto the chassis when the vehicle is driven in traffic. This is achieved by means of a vehicle provided with a balance, which is characterized in that the lifting and supporting device comprises at least four solidly mounted parallel and substantially horizontal, preferably cylindrical locking members, which are in pairs directed one opposite the other and which can be displaced in their longitudinal direction pneumatically or hydraulically, that each locking member has a conical free outer end, which is supposed to be jointly operative with a corresponding conical cavity in the corresponding holder member on the platform or tank, which said cavities are placed at such a level that, when the platform or tank is coupled free, they are placed somewhat lower than the corresponding locking members, whereby a little lifting effect and fixing of the platform or tank are obtained when the locking members are pushed into the holder members.

The other characteristics of the invention come out from the attached claims 1 to 4.

In the following, the invention will be described in more detail with reference to the attached drawing, wherein

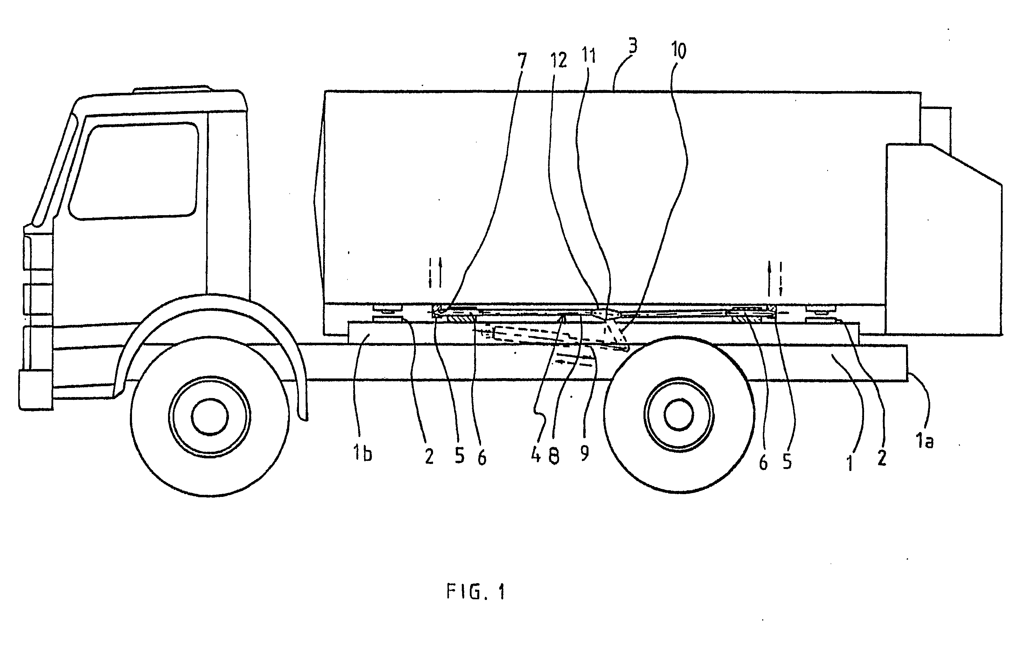

Figure 1 is a side view of an example of a vehicle provided with a balance in accordance with the invention, and

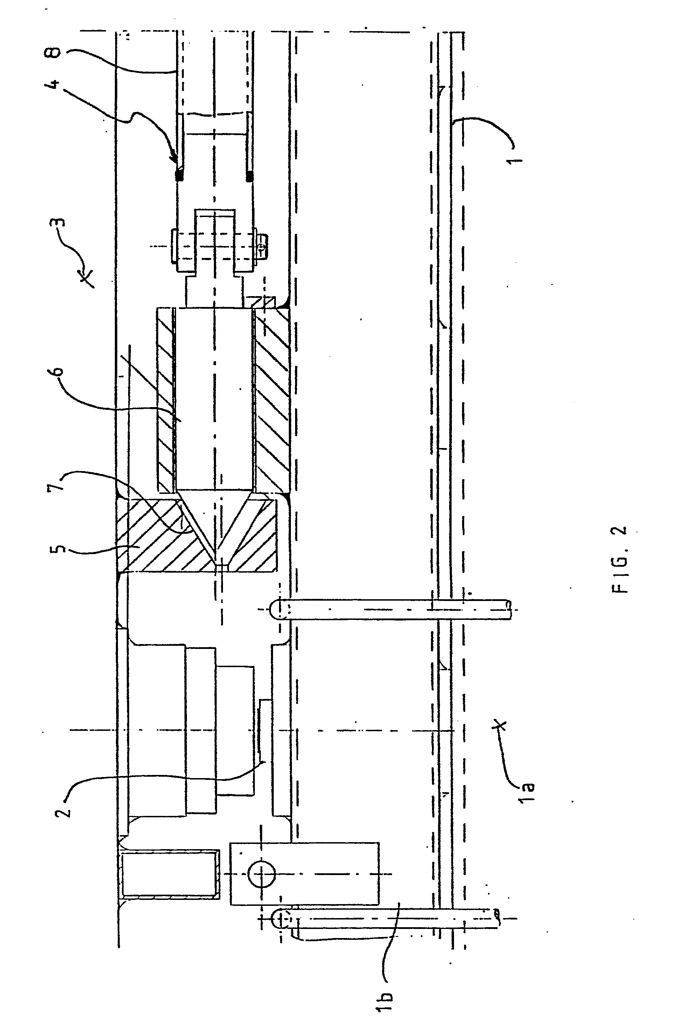

Figure 2 is a detailed view of the lifting and supporting device of the vehicle.

The vehicle provided with a balance comprises a reinforced, completely torsionally rigid frame 1, on which four electronic balance cells 2, connected to a common control unit, are mounted. The balance cells 2 are placed so that they are located each of them below its own corner portion of the vehicle platform or tank 3. The reinforcement of the vehicle frame can be arranged appropriately by proper placing on the frame 1a of an auxiliary frame 1b, on which the four balance cells 2 are then mounted. In order that the measurement results should be as reliable as possible, it is required that the frame 1 is completely torsionally rigid. During weighing, the platform or tank 3 must rest completely freely on the four balance cells 2 without any other support point. On the vehicle frame 1, a lifting and supporting device 4 is fitted, which, being jointly operative with holder members 5 placed at the bottom side of the platform or tank 3, is arranged so as to relieve the load of the balance cells 2 when the weighing has been completed as well as to fix the platform or tank 3 securely onto the frame so that no displacement or bending takes place relative to the frame when the vehicle runs on a highway or equivalent.

A suitable embodiment of the lifting and supporting device 4 comprises at least four solidly mounted parallel and substantially horizontal, preferably cylindrical locking members 6, which are in pairs directed one opposite the other and which can be displaced longitudinally pneumatically or hydraulically. Each locking member 6 is provided with a conical free outer end, which is supposed to be jointly operative with a corresponding conical cavity 7 in the corresponding holder member 5 on the platform or tank 3. The cavities are provided at such a level that, when the platform or tank 3 is coupled free, the cavities are placed somewhat lower than the corresponding locking members 6. This results therein that the conical tips of the locking members 6 direct a short lifting effect on the platform or tank 3 when the locking members 6 are pushed into the cavities 7 of the corresponding holder members, whereby, at the same time, a secure fixing of the platform or tank is obtained.

The locking members 6 may be arranged in the longitudinal or in the transverse direction of the vehicle. The longitudinal direction is, however, preferable, because the frame construction provides a larger space for the lifting and supporting device 4 in the said direction. The locking members 6 are suitably arranged so that a common working cylinder 9 acts upon them via articulated rods 8, which guarantees that all of the locking members 6 are pushed into or pulled out of their respective holder members 5 simultaneously. This again results in the circumstance that the platform or tank 3 follows an exact path during each vertical movement.

The working cylinder 9 may be connected, e.g., via a first lever 10 to a turning shaft 11, which is provided with a two-sided eccentric disc 12 for each pair of opposite locking members 6. Each locking member 6 is connected via an articulated rod 8 to the corresponding end of the respective eccentric disc 12.

In order to prevent driving of the vehicle while the platform or tank 3 is in the lowered free position, the working cylinder 9 of the lifting and supporting device 4 may be appropriately connected to the brake system of the vehicle so that the brakes are automatically locked when the platform or tank 3 is coupled free.

The lifting and supporting device 4 may also be arranged, e.g., so that it has a front and a rear turning shaft, each of which shafts is provided with at least two eccentric discs, which are, at their topmost position, provided with a radial stop face and with a locking pin or equivalent projecting from it tangentially, which said locking pin is arranged so as to penetrate into a hole made for the purpose into the holder member 5 at the bottom side of the platform or tank 3. The front turning shaft must have its eccentric discs turned so that the stop faces and the locking pins are turned forwards when they are in their topmost position, whereas the eccentric discs on the rear turning shaft must be turned so that their stop faces and locking pins are turned rearwards in the corresponding position. In this case as well, one single common working cylinder may be used as the drive member.

Such a vehicle provided with a balance is excellently suitable, e.g., for the distribution of mink feed from a large-scale feed preparation plant to individual mink farms, in which case the vehicle is preferably provided with a tank 3. The electronic balance is appropriately of such a type that its control unit is provided with a diskette unit for the reception of data on the quantity of feed or equivalent that is to be distributed to the customer concerned, which said data have been fed to a diskette in the computer of the large-scale feed preparation plant. The truck driver receives the diskette with delivery notes when he comes to the feed preparation plant in order to fill the tank 3 with feed. As the weighing apparatus is connected to the dosage pump of the tank, the dosage of the ordered quantity of feed for each customer can take place automatically as soon as the driver has fed in the code of the customer concerned to the control unit of the weighing apparatus. The weighing apparatus is appropriately also provided with an automatic printer, which is arranged so as to print, e.g., the customer and the dosaged quantity of feed on a paper strip of self-copying type, so that appropriately two copies of each dose are obtained. All the weighing data are collected in the diskette.

## Claims

1. Vehicle provided with a balance, which said vehicle comprises a reinforced frame (1), four electronic balance cells (2) connected to a control unit and mounted on the said frame (1) at points below each corner portion of the vehicle platform or tank (3), on which said balance cells (2) the said platform or tank (3) is supposed to rest freely during weighing, whereby the vehicle frame (1) is provided with a lifting and supporting device (4), which is, being jointly operative with corresponding holder members (5) placed at the bottom side of the platform or tank (3), arranged so as to relieve the load of the balance cells (2) and to fix the platform or tank (3) in a raised position when the vehicle is being driven, as well as to disconnect the platform or tank (3) completely free during weighing, **characterized** in that the lifting and supporting device (4) comprises at least four solidly mounted parallel and substantially horizontal, preferebly cylindrical locking members (6), which are in pairs directed one opposite the other and which can be displaced in their longitudinal direction pneumatically or hydraulically, that each locking member (6) has a conical free outer end, which is supposed to be jointly operative with a corresponding conical cavity (7) in the corresponding holder member (5) on the platform or tank (3), which said cavities (7) are placed at such a level that, when the platform or tank (3) is coupled free, they are placed somewhat lower than the corresponding locking members (6), whereby a little lifting effect and fixing of the platform or tank (3) are obtained when the locking members (6) are pushed into the holder members (5).

2. Vehicle provided with a balance as claimed in claim 1, **characterized** in that the locking members (6) are placed in the longitudinal direction of the vehicle and are arranged so that a common working cylinder (9) acts upon them via articulated rods (8), so that all of the locking members (6) are pushed into or pulled out of the corresponding holder members (5) simultaneously.

3. Vehicle provided with a balance as claimed in claim 2, **characterized** in that the working cylinder (9) is connected via a lever (10) to a turning shaft (11), which is provided with a two-sided eccentric disc (12) for each pair of locking members (6) placed one opposite the other, whereby each locking member (6) is linked to the corresponding eccentric disc (12) via an articulated rod (8).

4. Vehicle provided with a balance as claimed in any of the preceding claims, **characterized** in that the working cylinder (9) is connected to the brake system of the vehicle so that the brakes are automatically locked when the platform or tank (3) is coupled free.

**Patentansprüche**

1. Mit einer Waage ausgerüstetes Fahrzeug, welches besagte Fahrzeug einen verstärkten Rahmen (1), vier mit einer Steuereinheit verbundene und an Punkten unterhalb der Eckbereiche der Fahrzeug-Ladefläche oder des Ladebehälters (3) auf dem Rahmen angebrachte elektronische Wägezellen (2) aufweist, wobei die besagte Ladefläche oder der Ladebehälter (3) daran bestimmt ist, während des Wägens auf den besagten Wägezellen (2) frei zu ruhen, und der Fahrzeugrahmen (1) mit einer Hebe- und Tragevorrichtung (4) ausgerüstet ist, welche zusammen mit entsprechenden, an der Unterseite der Ladefläche oder des Ladebehälters (3) angebrachten Haltemitteln (5) betätigbar ist und dazu bestimmt ist, die Last von den Wägezellen (2) abzuheben und die Ladefläche oder den Ladebehälter (3) in einer angehobenen Position zu fixieren, wenn das Fahrzeug gefahren wird, sowie um die Ladefläche oder den Ladebehälter (3) während des Wägens vollständig zu entkoppeln, dadurch gekennzeichnet, dass die Hebe- und Tragevorrichtung (4) wenigstens vier fest angebrachte, parallele und im wesentlichen horizontale, vorzugsweise zylindrische Verriegelungsmittel (6) aufweist, welche paarweise einander gegenüberliegend ausgerichtet sind und welche in ihrer Längsrichtung pneumatisch oder hydraulisch verschoben werden können, dass jedes Verriegelungsmittel (6) ein konisches freies äusseres Ende hat, welches dazu bestimmt und geeignet ist, mit einer entsprechenden konischen Vertiefung (7) in dem entsprechenden Haltemittel (5) an der Ladefläche oder dem Ladebehälter (3) zusammenzuwirken, welche besagten Vertiefungen (7) auf einer solchen Höhe angebracht sind, dass wenn die Ladefläche oder der Ladebehälter (3) ausgekoppelt wird, diese etwas unterhalb der Verriegelungsmittel (6) liegen, wobei eine kleine Hebewirkung und ein Verriegeln der Ladefläche oder des Ladebehälters (3) erhalten wird, wenn die Verriegelungsmittel (6) in die Haltemittel (5) gedrückt werden.

2. Mit einer Waage ausgerüstetes Fahrzeug nach Anspruch 1, dadurch gekennzeichnet, dass die Verriegelungsmittel in Längsrichtung des Fahrzeuges angeordnet sind und so beschaffen sind, dass ein gemeinsamer Arbeitszylinder (9) über Hebel (8) auf sie wirkt, so dass sämtliche der Verriegelungsmittel (6) gleichzeitig in die entsprechenden Haltemittel (5) eingedrückt oder aus ihnen herausgezogen werden.

3. Mit einer Waage ausgerüstetes Fahrzeug nach Anspruch 2, dadurch gekennzeichnet, dass der Arbeitszylinder (9) mittels eines Hebels (10) mit einer Drehwelle (11) verbunden ist, welche mit einer doppelseitig exzentrischen Scheibe (12) für jedes Paar der sich gegenüberliegenden Verriegelungsmittel versehen ist, wobei jedes Verriegelungsmittel (6) über einen Hebel (8) mit der entsprechenden exzentrischen Scheibe (12) verbunden ist.

4. Mit einer Waage ausgerüstetes Fahrzeug nach einem der vorstehenden Ansprüche, dadurch gekennzeichnet, dass der Arbeitszylinder (9) mit dem Bremssystem des Fahrzeuges verbunden ist, so dass die Bremsen automatisch verriegelt werden, wenn die Ladefläche oder der Ladebehälter (3) ausgekoppelt wird.

**Revendications**

1. Véhicule équipé d'une balance, lequel véhicule comprend un châssis renforcé (1), quatre cellules électroniques de balance (2) reliées à une unité de commande et montées sur ledit châssis (1) en des points au-dessous de chaque portion de coin de la plateforme ou de la citerne (3) du véhicule, sur lesquelles cellules de balance (2) ladite plateforme ou citerne (3) est supposée reposer librement durant le pesage, où le châssis du véhicule (1) est doté d'un dispositif de levage et de support (4) qui, opérant en association avec des éléments de fixation correspondants (5) placés en dessous de la plateforme ou de la citerne (3), est agencé pour soulager la charge des cellules de balance (2) et fixer la plateforme ou la citerne (3) dans une position levée lorsque le véhicule roule, ainsi que pour libérer complètement la plateforme ou la citerne (3) durant le pesage, caractérisé en ce que le dispositif de levage et de support (4) comprend au moins quatre éléments de verrouillage (6) de préférence cylindriques, parallèles et substantiellement horizontaux montés solidement, qui constituent des paires opposées et qui peuvent être déplacés dans leur sens longitudinal pneumatiquement ou hydrauliquement, en ce que chaque élément de verrouillage (6) comporte une extrémité extérieure libre conique, qui est supposée opérer en association avec une cavité conique correspondante (7) dans l'élément de fixation correspondant (5) sur la plateforme ou la citerne (3), lesquelles cavités (7) sont placées à un niveau tel que, lorsque la plateforme ou la citerne (3) est libérée, elles se situent un peu plus bas que les éléments de verrouillage correspondants (6), afin qu'un léger effet de levage et qu'une fixation de la plateforme ou de la citerne (3) soient obtenus lorsque les éléments de verrouillage (6) sont poussés dans les éléments de fixation (5).

2. Véhicule équipé d'une balance selon la revendication 1, caractérisé en ce que les éléments de verrouillage (6) sont placés dans le sens de la longueur du véhicule et sont agencés de sorte qu'un cylindre moteur commun (9) agisse sur eux via des bielles articulées (8) pour que tous les éléments de verrouillage (6) soient poussés dans les éléments de fixation correspondants (5) ou sortis de ces derniers en même temps.

3. Véhicule équipé d'une balance selon la revendication 2, caractérisé en ce que le cylindre moteur (9) est relié via un levier (10) à un arbre rotatif (11), qui est doté d'un disque à came à deux faces (12) pour chacune des paires d'éléments de verrouillage (6) opposées, afin que chaque élément de verrouillage (6) soit relié au disque à came (12) correspondant via une bielle articulée (8).

4. Véhicule équipé d'une balance selon l'une quelconque des revendications précédentes, caractérisé en ce que le cylindre moteur (9) est relié au système de freinage du véhicule pour que les freins soient verrouillés automatiquement lorsque la plateforme ou la citerne (3) est libérée.

FIG. 1

FIG. 2

EP 0 200 281 B1